# EUROPEAN PATENT SPECIFICATION

(11) **EP 3 134 721 B1**
(45) Date of publication and mention of the grant of the patent: **01.12.2021**
(21) Application number: 15718991.1
(22) Date of filing: 17.04.2015
(51) Int. Cl.: G01N 15/14, G01N 15/08

(54) **HIGH-THROUGHPUT FLUID SAMPLE CHARACTERIZATION**
FLÜSSIGKEITSPROBENCHARAKTERISIERUNG MIT HOHEM DURCHSATZ
CARACTÉRISATION D'ÉCHANTILLON DE FLUIDE À HAUT RENDEMENT

(30) Priority: 22.04.2014 US 201461982810 P
(43) Date of publication of application: 01.03.2017
(73) Proprietor: Malvern Panalytical Limited, Malvern, Worcestershire WR14 1XZ (GB)
(72) Inventor: VAISMAN, Alon, Billerica, Massachusetts 01821 (US); MCCAFFREY, John, Columbia, Maryland 21045 (US); BENNET, Peter, Columbia, Maryland 21046 (US); PATIL, Vishal, Columbia, Maryland 21044 (US)
(74) Representative: Barker Brettell LLP
(86) International application number: PCT/GB2015/051167
(87) International publication number: WO 2015/162411

(56) References cited:
- WO-A2-2013/190326
- US-A1- 2010 225 898
- US-A1- 2014 002 662

## Description

### Field of the Invention

This invention relates to methods and apparatus for detecting properties of heterogeneous samples, including detecting properties of particles, such as fluid droplets in industrial processes.

### Background of the Invention

Laser diffraction and other methods are used to characterize samples in which a liquid carries suspended particles, which may be solid or liquid. To achieve higher throughput, prior art systems have diverted part of the flow through a side conduit to test a fraction of the flow. WO2013/190326 discloses an apparatus for detecting properties of particles, in which the particles flow past a two-dimensional array detector which acquires images. The particles are caused to flow along an imaging channel past the detector, and through a pair of bypass channels. The bypass channels may be larger than the imaging channel.

### Summary of the Invention

Several aspects of the invention are presented below and in the appended claims.

Systems according to the invention can allow laser diffraction and other methods to accurately characterize particles suspended in liquids at high rates of flow with little or no effect on the very particles that the system seeks to measure. This contrasts with some prior art systems that divert part of the sample to a side channel and in the process can break up particles or create a flow pattern that tends to favor the diversion of some particles relative to others at higher flow rates.

According to an aspect, a particle characterization method is disclosed, comprising:
receiving a fluid that carries particles flowing along a flow axis,
receiving a first subset of the fluid in a central acquisition channel,
receiving second and third subsets of the fluid in a pair of lateral bypass channels disposed on either side of the central imaging channel,
illuminating the first subset of the fluid along an optical axis through a window in the central imaging channel with a radiation beam,
acquiring radiation from the sample resulting from interaction of the radiation beam with the sample, and
deriving information about the particles from the radiation acquired in the step of acquiring.

The particles may be liquid droplets (or solid particles).

The flow within the central acquisition channel may be termed the acquisition flow. The flow within the pair of bypass channels may be termed the bypass flow.

The central acquisition channel increases in width and decrease in depth along the flow axis perpendicular to the optical axis before the central acquisition channel reaches the window.

The steps of receiving (i.e. any of the steps of receiving, some of the steps of receiving, or all of the steps of receiving) slows the overall flow of the received acquisition and bypass flows by presenting a larger overall cross section upstream of the window.

The steps of receiving may employ a succession of channel cross-sections that are optimized to minimize shear stresses on the acquisition and bypass flows. For instance, a succession of acquisition channel cross-sections may be employed in the step of receiving the first subset of the fluid in the acquisition channel that are optimized to minimize shear stresses on the acquisition flow.

The central acquisition channel may decrease in width and increase in depth along the flow axis perpendicular to the optical axis after it reaches the window.

The rate of increase in the depth and decrease of the width may differ in a manner that minimizes shear forces on the particles as they pass through the central acquisition channel.

The step of receiving the fluid may include receiving the fluid through a cylindrical conduit.

The method may further include the step of returning the fluid to another cylindrical conduit after the steps of illuminating and acquiring.

The step of receiving the fluid may include receiving the fluid through a conduit having a diameter of at least about 6.35mm (0.25 inches) or at least about 12.7mm (0.5 inches).

The step of receiving the fluid may include receiving the fluid at a flow rate of at least about: 3 liters per minute, 10 liters per minute, or 25 liters per minute.

The step of illuminating may be performed by a laser and the step of acquiring may acquire scattered radiation.

The aggregate flow capacity of the lateral bypass channels may exceed that of the central acquisition channel by at least a factor of about 10 at the window.

The flow capacity may be defined as an amount of flow through the respective channel for a specific pressure drop over the length of the channel. The flow capacity may alternatively be defined as the average cross sectional area.

The step of receiving a fluid includes receiving droplets of a first liquid suspended in a second liquid.

The step of receiving a fluid may include receiving droplets of water suspended in a hydrocarbon.

The step of receiving a fluid may include receiving droplets of water suspended in diesel fuel.

The central acquisition channel may comprise a a depth of: less than 1 mm, less than 4 mm, or about 0.5 mm.

The steps of receiving a first subset of the fluid in a central acquisition channel and receiving second and third subsets of the fluid in a pair of lateral bypass channels disposed on either side of the central acquisition channel may take place in an overall width of about 200mm (8 inches).

According to another aspect, there is provided a particle characterization apparatus, comprising:
a sample cell that includes:
an input opening for receiving a fluid that carries particles flowing along a flow axis,
a central acquisition channel hydraulically responsive to the input channel for receiving a first subset of the fluid,
a pair of lateral bypass channels hydraulically responsive to the input channel and disposed on either side of the central acquisition channel for receiving second and third subsets of the fluid,
a window in the central acquisition channel for illuminating the first subset of the fluid in the central acquisition channel,
an illumination source positioned to illuminate the fluid in the central acquisition channel through the window along an optical axis, and
a detector positioned to receive light from the fluid in the central acquisition channel after it has interacted with the fluid.

The central acquisition channel increases in width and decrease in depth along the flow axis perpendicular to the optical axis before it reaches (i.e. upstream of) the window.

The cell slows the overall flow of the received acquisition and bypass flows by presenting a larger overall cross section upstream of the window.

The cell may employ a succession of channel cross-sections that are optimized to minimize shear stresses on the acquisition and bypass flows.

The central acquisition channel may decrease in width and increase in depth along the flow axis perpendicular to the optical axis after it reaches (i.e. downstream of) the window.

The rate of increase and decrease of the width may differ in a manner that minimizes shear forces on the particles as they pass through the central acquisition channel.

The input opening may receive the fluid through a cylindrical conduit.

The apparatus may further include an output opening that returns the fluid to another cylindrical conduit.

The input opening may have a diameter of at least about 0.25 inches or at least about 0.5 inches.

The cell may be designed to receive the fluid at a flow rate of at least about: 3 liters per minute, or 10 liters per minute.

The illumination source may include a laser and the detector may include a scattering detector.

The aggregate flow capacity of the lateral bypass channels may exceed that of the central acquisition channel by at least a factor of about 10 at the window.

The central acquisition channel may comprise a depth of: less than 1 mm, less than 4 mm, or less than 0.5 mm.

The cell may have an overall width of about 200mm (8 inches).

The cell may further include another window in the central acquisition channel to pass light to the detector from the fluid in the central acquisition channel after it has interacted with the fluid.

According to an example that is not within the scope of the claims, there is provided a particle characterization apparatus, comprising:
means for receiving a fluid that carries particles flowing along a flow axis,
means for receiving a first subset of the fluid in an acquisition channel,
means for receiving second and third subsets of the fluid in a pair of bypass channels,
means for illuminating the first subset of the fluid,
means for acquiring radiation from the sample resulting from interaction of the radiation beam with the sample, and
means for deriving information about the particles from the radiation acquired by the means for acquiring.

### Brief Description of the Drawings

Fig. 1 is a block diagram of a particle characterization system according to the invention,
Fig. 2 is a first cross-sectional diagram of a high-throughput sample cell for the system of Fig. 1, cut as shown by line 2-2 in Fig. 3;
Fig. 3 is a second cross-sectional diagram of the sample cell of Fig. 2, cut as shown by line 3-3 in Fig. 2;
Fig. 4 is a third cross-sectional diagram of the sample cell of Fig. 2, cut as shown by lines 4-4 in Figs. 2 and 3; and
Fig. 5 is a plot of the cross-sectional area of the detection cell of Fig. 2 along its flow direction.

### Detailed Description of an Illustrative Embodiment

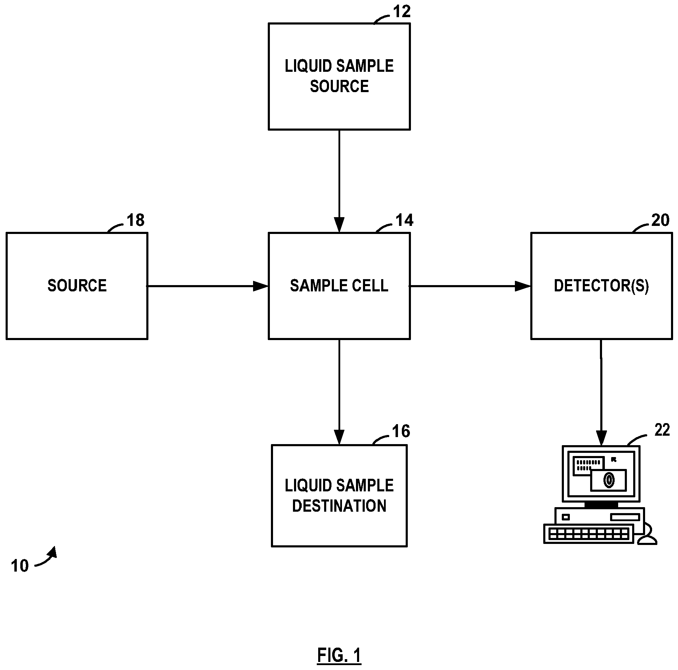

Referring to Fig. 1, a particle characterization system 10 according to the invention characterizes a sample that includes particles suspended in a liquid received from a liquid sample source 12, and passes it along to its destination 16, which may be a downstream processing station in an industrial process. The system includes a sample cell 14 that is hydraulically connected between the liquid sample source and the liquid sample destination. It also includes at least one radiation source 18, such as a laser, which irradiates the sample cell, such as through a window, and one or more detectors 20, which detect radiation that has interacted with the sample. An analysis and/or control system 22 is responsive to the detectors and can receive, record, and analyze signals from the detectors to such as to derive size values from the detector signals. It can also control the system, such as by strobing the irradiation source.

In one embodiment, the system performs laser diffraction measurements on diesel fuel to characterize water droplets suspended in the fuel, although other types of optical point, line, or image-based measurements can also be performed on other kinds of samples. In this embodiment, the source is a laser and the detectors include a number of scattering detectors disposed at different positions opposite the laser with respect to the sample cell. The system can employ an off-the-shelf spray characterization system, such as the Insitec Wet system available from Malvern, Inc., to measure the ensemble average particle size within the sample.

The analysis and/or control system 22 can include special-purpose software programs running on a general-purpose computer platform in which stored program instructions are executed on a processor, but it could also be implemented in whole or in part using special-purpose hardware.

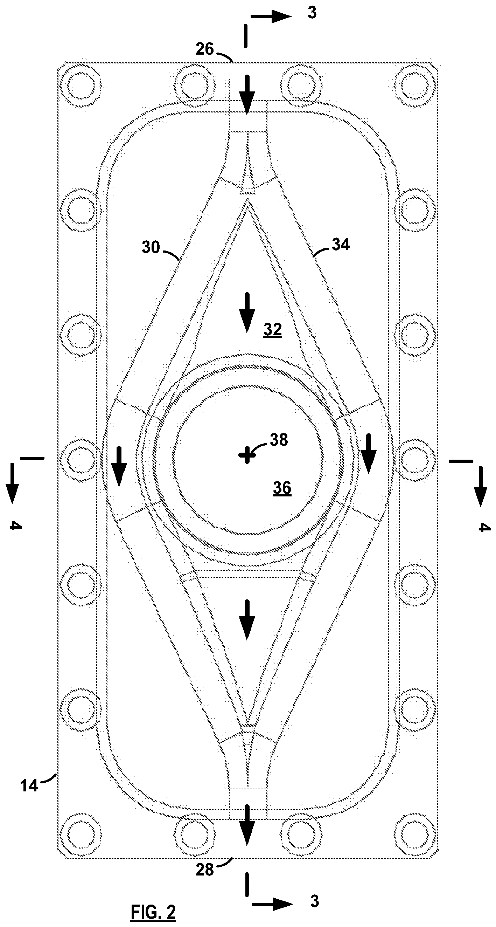

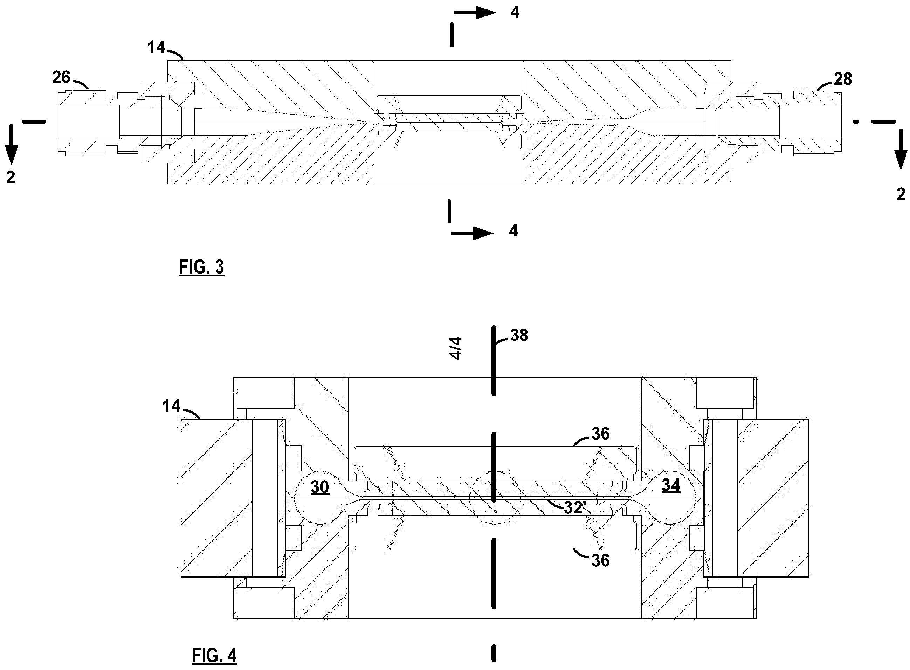

Referring to Figs. 2-4, the sample cell 14 includes an input opening 26 that receives the liquid sample. Downstream from the input opening, the cell opens up and gradually diverges into three channels: a left bypass channel 30, a central imaging or acquisition channel 32, and a right bypass channel 34. The central imaging channel passes straight through the cell and becomes both wider and shallower until it reaches an imaging (or acquisition) chamber 32' between two windows 36. The bypass channels gently diverge to the sides of the cell and also increase somewhat in diameter over the same distance. After the imaging chamber, the channels generally follow a mirror image of their path into the chamber, ending at an output opening 28.

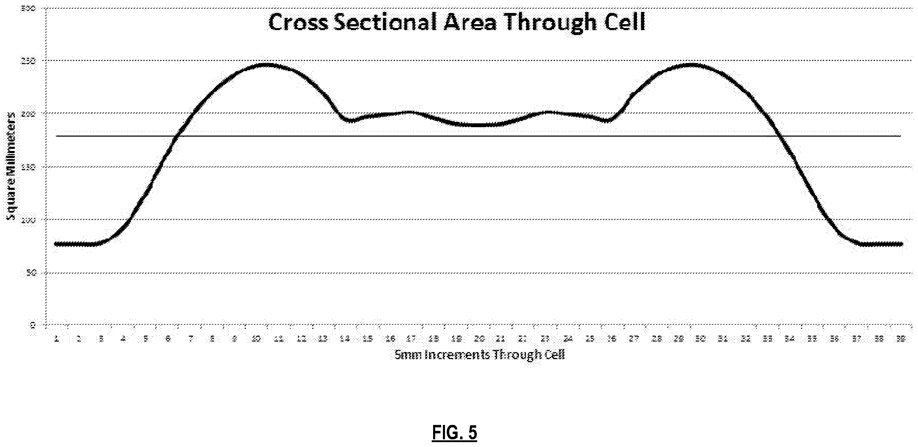

Referring also to Fig. 5, the aggregate cross-sectional area of the inside flow volume of the cell is initially that of a standard 0.5 inch conduit. It then increases steadily as the measurement and bypass and channels spread the flow. As the flow reaches the measurement chamber, the cross-sectional area decreases and then remains generally stable over the span of the measurement chamber. The flow then increases and decreases again after the chamber according to a profile that is generally a mirror image of the incoming increase and decrease.

The profile was designed to slow the sample and gently split it into the three channels without imposing undue shear stresses on the sample. This was accomplished by simulating the flow and iteratively adjusting the profile until the simulated shear stresses were below an acceptable level. In this embodiment, the Ansys CFX software package available from Ansys Inc. was used to model the flow during the design process. Note that minimizing shear stresses results in a design in which the incoming geometry is not exactly symmetrical with respect to the outgoing geometry.

An implementation of the sample cell has been built using a clam-shell design with two numerically machined halves that are bolted together, although other designs could also be implemented.

The central imaging channel is preferably centered around an optical axis 38 along which the sample is irradiated. The imaging axis is also preferably located at the center of the cell perpendicular to its flow direction. Other optical arrangements are also possible, such as embodiments in which the optical axis passes through the windows at an angle or in which the optical axis is located upstream or downstream from the center of the cell.

The above-described system was designed and simulated in an application to test diesel fuel against ISO 16332, which is a standard method for evaluating the fuel/water separation efficiency of diesel engine filters. The cell was designed to operate between 3 and 28 LPM and was capable of measuring water droplets between 5-200µm in diameter in fuel. The results of running an SST (Shear Stress Transport) model to simulate turbulent flow and TAB (Taylor analogy breakup) model to predict breakup of a 200µm water droplet with a surface tension of 10 mN/m at a flow rate of 28 LPM demonstrated good performance with no significant particle breakup of the 200µm droplets.

The present invention has now been described in connection with a number of specific embodiments thereof. However, numerous modifications which are contemplated as falling within the scope of the present invention should now be apparent to those skilled in the art. For example, while the particles are described as being liquid droplets in the embodiments shown, they can also be solid or gaseous. More comprehensively, systems according to the invention are applicable to heterogeneous fluid samples that include a continuous liquid or gas phase and a discontinuous phase that can include either a liquid, solid, or gas. It is therefore intended that the scope of the present invention be limited only by the scope of the claims appended hereto. In addition, the order of presentation of the claims should not be construed to limit the scope of any particular term in the claims.

## Claims

1. A particle characterization method, comprising:
receiving a fluid that carries particles flowing along a flow axis,
receiving a first subset of the fluid in a central acquisition channel (32),
receiving second and third subsets of the fluid in a pair of lateral bypass channels (30, 34) disposed on either side of the central imaging channel (32),
illuminating the first subset of the fluid along an optical axis (38) through a window (36) in the central imaging channel (32) with a radiation beam,
acquiring radiation from the sample resulting from interaction of the radiation beam with the sample, and
deriving information about the particles from the radiation acquired in the step of acquiring;
wherein the central acquisition channel (32) increases in width and decreases in depth along the flow axis perpendicular to the optical axis (38) before the central acquisition channel (32) reaches the window (36), and the step of receiving slows the overall flow of the received acquisition and bypass flows by presenting a larger overall cross section upstream of the window (36).

2. The method of claim 1 wherein the step of receiving the fluid in the central acquisition channel (32) employs a succession of channel cross-sections that are optimized to minimize shear stresses on the acquisition flow.

3. The method of claim 1 or 2 wherein the central acquisition channel (32) decreases in width and increases in depth along the flow axis perpendicular to the optical axis (38) after it reaches the window (36).

4. The method of claim 3 wherein the rate of increase and decrease of the width differs in a manner that minimizes shear forces on the particles as they pass through the central acquisition channel (32).

5. The method of any preceding claim wherein the step of receiving the fluid includes receiving the fluid through a conduit having a diameter of at least about 6.35mm (0.25 inches) or 12.7mm (0.5 inches); and/or
wherein the step of receiving the fluid includes receiving the fluid at a flow rate of at least about: 3 liters per minute, 10 liters per minute, or 25 liters per minute; and/or
wherein the central acquisition channel (32) comprises a depth of: less than 1 mm, less than 4 mm, or about 0.5 mm.

6. The method of any preceding claim wherein the step of illuminating is performed by a laser and wherein the step of acquiring acquires scattered radiation.

7. The method of any preceding claim wherein the particles are droplets of a first liquid suspended in a second liquid, optionally wherein the particles are droplets of water suspended in a hydrocarbon, or the particles are droplets of water suspended in diesel fuel.

8. A particle characterization apparatus (10), comprising:
a sample cell (14) that includes:
an input opening (26) for receiving a fluid that carries particles flowing along a flow axis,
a central acquisition channel (32) hydraulically responsive to the input opening (26) for receiving a first subset of the fluid,
a pair of lateral bypass channels (30, 34) hydraulically responsive to the input opening (26) and disposed on either side of the central acquisition channel (32) for receiving second and third subsets of the fluid,
a window (36) in the central acquisition channel (32) for illuminating the first subset of the fluid in the central acquisition channel (32),
an illumination source positioned to illuminate the fluid in the central acquisition channel through the window (36) along an optical axis (38), and
a detector (20) positioned to receive light from the fluid in the central acquisition channel after it has interacted with the fluid;
wherein the central acquisition channel (32) increases in width and decreases in depth along the flow axis perpendicular to the optical axis (38) before it reaches the window (36), and the cell (14) slows the overall flow of the received acquisition and bypass flows by presenting a larger overall cross section upstream of the window (36).

9. The apparatus (10) of claim 8 wherein the cell (14) employs a succession of channel cross-sections that are optimized to minimize shear stresses on the acquisition and bypass flows.

10. The apparatus (10) of claim 8 or 9 wherein the central acquisition channel (32) decreases in width and increases in depth along the flow axis perpendicular to the optical axis (38) after it reaches the window (36).

11. The apparatus (10) of claim 10 wherein the rate of increase and decrease of the width differ in a manner that minimizes shear forces on the particles as they pass through the central acquisition channel (32).

12. The apparatus (10) of any of claims 8 to 10 wherein: the input opening (26) has a diameter of at least about 0.25 inches or at least about 0.5 inches; and/or
wherein the cell (14) is designed to receive the fluid at a flow rate of at least about: 3 liters per minute, or 10 liters per minute.

13. The apparatus (10) of any of claims 8 to 12 wherein the illumination source includes a laser and the detector includes a scattering detector.

14. The apparatus (10) of any of claims 8 to 13 wherein the central acquisition channel (32) comprises a depth of: less than 1 mm, less than 4 mm, or less than 0.5 mm.

15. The apparatus (10) of any of claims 8 to 14 wherein the cell (14) further includes another window in the central acquisition channel (32) to pass light to the detector (20) from the fluid in the central acquisition channel (32) after it has interacted with the fluid.

## Patentansprüche

1. Partikelcharakterisierungsverfahren, umfassend:
Aufnehmen eines Fluids, das Partikel trägt, das entlang einer Strömungsachse fließt,
Aufnehmen einer ersten Teilmenge des Fluids in einen zentralen Erfassungskanal (32),
Aufnehmen von zweiten und dritten Teilmengen des Fluids in ein Paar von seitlichen Nebenkanälen (30, 34), die an beiden Seiten des zentralen Bildgebungskanals (32) angeordnet sind,
Beleuchten der ersten Teilmenge des Fluids entlang einer optischen Achse (38) durch ein Fenster (36) in dem zentralen Bildgebungskanal (32) mit einem Strahlenbündel,
Erfassen von Strahlung aus der Probe, die durch Wechselwirkung des Strahlenbündels mit der Probe entsteht, und
Ableiten von Information über die Partikel aus der bei dem Schritt des Erfassens erfassten Strahlung;
wobei der zentrale Erfassungskanal (32) entlang der Strömungsachse senkrecht zu der optischen Achse (38) an Breite zunimmt und an Tiefe abnimmt, bevor der zentrale Erfassungskanal (32) das Fenster (36) erreicht, und der Schritt des Aufnehmens den Gesamtfluss der aufgenommenen Erfassungs- und Nebenflüsse verlangsamt, indem ein größerer Gesamtquerschnitt stromaufwärts bezogen auf das Fenster (36) vorliegt.

2. Verfahren gemäß Anspruch 1, wobei der Schritt des Aufnehmens des Fluids in den zentralen Erfassungskanal (32) eine Abfolge von Kanalquerschnitten einsetzt, die optimiert sind, Scherspannungen an dem Erfassungsfluss zu minimieren.

3. Verfahren gemäß Anspruch 1 oder 2, wobei der zentrale Erfassungskanal (32) entlang der Strömungsachse senkrecht zu der optischen Achse (38) an Breite abnimmt und an Tiefe zunimmt, nachdem er das Fenster (36) erreicht hat.

4. Verfahren gemäß Anspruch 3, wobei sich die Raten des Zunehmens und Abnehmens der Breite auf eine Weise unterscheiden, die Scherkräfte an den Partikeln, während sie durch den zentralen Erfassungskanal (32) treten, minimiert.

5. Verfahren gemäß einem der vorstehenden Ansprüche, wobei der Schritt des Aufnehmens des Fluids Aufnehmen des Fluids durch eine Leitung mit einem Durchmesser von wenigstens etwa 6,35 mm (0,25 Inch) oder 12,7 mm (0,5 Inch) umfasst; und/oder
wobei der Schritt des Aufnehmens des Fluids Aufnehmen des Fluids mit einer Flussrate von wenigstens etwa: 3 Liter pro Minute, 10 Liter pro Minute oder 25 Liter pro Minute umfasst; und/oder
wobei der zentrale Erfassungskanal (32) eine Tiefe von: weniger als 1 mm, weniger als 4 mm oder etwa 0,5 mm aufweist.

6. Verfahren gemäß einem der vorstehenden Ansprüche, wobei der Schritt des Beleuchtens durch einen Laser durchgeführt wird und wobei der Schritt des Erfassens gestreute Strahlung erfasst.

7. Verfahren gemäß einem der vorstehenden Ansprüche, wobei die Partikel Tröpfchen einer ersten Flüssigkeit sind, die in einer zweiten Flüssigkeit suspendiert sind, wobei die Partikel gegebenenfalls Tröpfchen von in einem Kohlenwasserstoff suspendiertem Wasser sind oder die Partikel Tröpfchen von in Dieselkraftstoff suspendiertem Wasser sind.

8. Partikelcharakterisierungsvorrichtung (10), umfassend:
eine Probenzelle (14), die aufweist:
eine Eingangsöffnung (26) zum Aufnehmen eines Fluids, das Partikel trägt, das entlang einer Strömungsachse fließt,
einen zentralen Erfassungskanal (32), der hydraulisch auf die Eingangsöffnung (26) anspricht, zum Aufnehmen einer ersten Teilmenge des Fluids,
ein Paar von seitlichen Nebenkanälen (30, 34), die hydraulisch auf die Eingangsöffnung (26) ansprechen und an beiden Seiten des zentralen Erfassungskanals (32) angeordnet sind, zum Aufnehmen von zweiten und dritten Teilmengen des Fluids,
ein Fenster (36) in dem zentralen Erfassungskanal (32) zum Beleuchten der ersten Teilmenge des Fluids in dem zentralen Erfassungskanal (32),
eine Beleuchtungsquelle, die angeordnet ist, das Fluid in dem zentralen Erfassungskanal durch das Fenster (36) entlang einer optischen Achse (38) zu beleuchten, und
einen Detektor (20), der angeordnet ist, Licht von dem Fluid in dem zentralen Erfassungskanal aufzunehmen, nachdem es mit dem Fluid interagiert hat;
wobei der zentrale Erfassungskanal (32) entlang der Strömungsachse senkrecht zu der optischen Achse (38) an Breite zunimmt und an Tiefe abnimmt, bevor er das Fenster (36) erreicht, und die Zelle (14) den Gesamtfluss der aufgenommenen Erfassungs- und Nebenflüsse verlangsamt, indem sie einen größeren Gesamtquerschnitt stromaufwärts bezogen auf das Fenster (36) aufweist.

9. Vorrichtung (10) gemäß Anspruch 8, wobei die Zelle (14) eine Abfolge von Kanalquerschnitten einsetzt, die optimiert sind, Scherspannungen an den Erfassungs- und Nebenflüssen zu minimieren.

10. Vorrichtung (10) gemäß Anspruch 8 oder 9, wobei der zentrale Erfassungskanal (32) entlang der Strömungsachse senkrecht zu der optischen Achse (38) an Breite abnimmt und an Tiefe zunimmt, nachdem er das Fenster (36) erreicht hat.

11. Vorrichtung (10) gemäß Anspruch 10, wobei sich die Raten des Zunehmens und Abnehmens der Breite auf eine Weise unterscheiden, die Scherkräfte an den Partikeln, während sie durch den zentralen Erfassungskanal (32) treten, minimiert.

12. Vorrichtung (10) gemäß einem der Ansprüche 8 bis 10, wobei: die Eingangsöffnung (26) einen Durchmesser von wenigstens etwa 0,25 Inch oder wenigstens etwa 0,5 Inch aufweist; und/oder
wobei die Zelle (14) dafür ausgelegt ist, das Fluid mit einer Flussrate von wenigstens etwa: 3 Liter pro Minute oder 10 Liter pro Minute aufzunehmen.

13. Vorrichtung (10) gemäß einem der Ansprüche 8 bis 12, wobei die Beleuchtungsquelle einen Laser aufweist und der Detektor einen Streudetektor aufweist.

14. Vorrichtung (10) gemäß einem der Ansprüche 8 bis 13, wobei der zentrale Erfassungskanal (32) eine Tiefe von: weniger als 1 mm, weniger als 4 mm oder etwa 0,5 mm aufweist.

15. Vorrichtung (10) gemäß einem der Ansprüche 8 bis 14, wobei die Zelle (14) ferner ein weiteres Fenster in dem zentralen Erfassungskanal (32) aufweist, um Licht von dem Fluid in dem zentrale Erfassungskanal (32) zu dem Detektor (20) zu führen, nachdem es mit dem Fluid interagiert hat.

## Revendications

1. Procédé de caractérisation de particules, comprenant :
la réception d'un fluide qui transporte des particules s'écoulant le long d'un axe d'écoulement,
la réception d'un premier sous-ensemble du fluide dans un canal d'acquisition central (32),
la réception des deuxième et troisième sous-ensembles du fluide dans une paire de canaux de dérivation latéraux (30, 34) disposés de chaque côté du canal d'imagerie central (32),
l'éclairage du premier sous-ensemble du fluide le long d'un axe optique (38) à travers une fenêtre (36) dans le canal d'imagerie central (32) avec un faisceau de rayonnement,
l'acquisition du rayonnement de l'échantillon résultant de l'interaction du faisceau de rayonnement avec l'échantillon, et
la dérivation d'informations relatives aux particules à partir du rayonnement acquis dans l'étape d'acquisition ;
le canal d'acquisition central (32) augmentant en largeur et diminuant en profondeur le long de l'axe d'écoulement perpendiculaire à l'axe optique (38) avant que le canal d'acquisition central (32) n'atteigne la fenêtre (36), et l'étape de réception ralentissant l'écoulement global des écoulements d'acquisition et de dérivation reçus en présentant une section transversale globale plus grande en amont de la fenêtre (36).

2. Procédé selon la revendication 1, l'étape de réception du fluide dans le canal d'acquisition central (32) utilisant une succession de sections transversales de canal qui sont optimisées pour minimiser les contraintes de cisaillement sur l'écoulement d'acquisition.

3. Procédé selon la revendication 1 ou 2, le canal d'acquisition central (32) diminuant en largeur et augmentant en profondeur le long de l'axe d'écoulement perpendiculaire à l'axe optique (38) après avoir atteint la fenêtre (36).

4. Procédé selon la revendication 3, le taux d'augmentation et de diminution de la largeur différant d'une manière qui minimise les forces de cisaillement sur les particules lorsqu'elles passent à travers le canal d'acquisition central (32).

5. Procédé selon l'une quelconque des revendications précédentes, l'étape de réception du fluide comprenant la réception du fluide à travers un conduit ayant un diamètre d'au moins environ 6,35 mm (0,25 pouce) ou 12,7 mm (0,5 pouce) ; et/ou
l'étape de réception du fluide comprenant la réception du fluide à un débit d'au moins environ : 3 litres par minute, 10 litres par minute, ou 25 litres par minute ; et/ou
le canal d'acquisition central (32) comprenant une profondeur de : moins de 1 mm, moins de 4 mm, ou environ 0,5 mm.

6. Procédé selon l'une quelconque des revendications précédentes, l'étape d'éclairage étant réalisée par un laser et l'étape d'acquisition faisant l'acquisition d'un rayonnement diffusé.

7. Procédé selon l'une quelconque des revendications précédentes, les particules étant des gouttelettes d'un premier liquide en suspension dans un second liquide, éventuellement les particules étant des gouttelettes d'eau en suspension dans un hydrocarbure, ou les particules étant des gouttelettes d'eau en suspension dans du carburant diesel.

8. Appareil de caractérisation de particules (10), comprenant : une cellule d'échantillonnage (14) qui comprend :
une ouverture d'entrée (26) pour recevoir un fluide qui transporte des particules s'écoulant le long d'un axe d'écoulement,
un canal d'acquisition central (32) réagissant hydrauliquement à l'ouverture d'entrée (26) pour recevoir un premier sous-ensemble du fluide,
une paire de canaux de dérivation latéraux (30, 34) répondant hydrauliquement à l'ouverture d'entrée (26) et disposés de chaque côté du canal d'acquisition central (32) pour recevoir des deuxième et troisième sous-ensembles du fluide,
une fenêtre (36) dans le canal d'acquisition central (32) pour éclairer le premier sous-ensemble du fluide dans le canal d'acquisition central (32),
une source d'éclairage positionnée pour éclairer le fluide dans le canal d'acquisition central à travers la fenêtre (36) le long d'un axe optique (38), et
un détecteur (20) positionné pour recevoir la lumière du fluide dans le canal d'acquisition central après qu'il a interagi avec le fluide ;
le canal d'acquisition central (32) augmentant en largeur et diminuant en profondeur le long de l'axe d'écoulement perpendiculaire à l'axe optique (38) avant d'atteindre la fenêtre (36), et la cellule (14) ralentissant l'écoulement global des écoulements d'acquisition et de dérivation reçus en présentant une section transversale globale plus grande en amont de la fenêtre (36).

9. Appareil (10) selon la revendication 8, la cellule (14) utilisant une succession de sections transversales de canal qui sont optimisées pour minimiser des contraintes de cisaillement sur les flux d'acquisition et de dérivation.

10. Appareil (10) selon la revendication 8 ou 9, le canal d'acquisition central (32) diminuant en largeur et augmentant en profondeur le long de l'axe d'écoulement perpendiculaire à l'axe optique (38) après avoir atteint la fenêtre (36).

11. Appareil (10) selon la revendication 10, le taux d'augmentation et de diminution de la largeur différant d'une manière qui minimise des forces de cisaillement sur les particules lorsqu'elles passent à travers le canal d'acquisition central (32).

12. Appareil (10) selon l'une quelconque des revendications 8 à 10, l'ouverture d'entrée (26) ayant un diamètre d'au moins environ 0,25 pouce ou d'au moins environ 0,5 pouce ; et/ou
la cellule (14) étant conçue pour recevoir le fluide à un débit d'au moins environ : 3 litres par minute, ou 10 litres par minute.

13. Appareil (10) selon l'une quelconque des revendications 8 à 12, la source d'éclairage comprenant un laser et le détecteur comprenant un détecteur de diffusion.

14. Appareil (10) selon l'une quelconque des revendications 8 à 13, le canal d'acquisition central (32) comprenant une profondeur de : moins de 1 mm, moins de 4 mm, ou moins de 0,5 mm.

15. Appareil (10) selon l'une quelconque des revendications 8 à 14, la cellule (14) comprenant en outre une autre fenêtre dans le canal d'acquisition central (32) pour faire passer la lumière vers le détecteur (20) à partir du fluide dans le canal d'acquisition central (32) après qu'il a interagi avec le fluide.
